# EUROPEAN PATENT SPECIFICATION

(11) **EP 3 671 904 B1**
(45) Date of publication and mention of the grant of the patent: **07.06.2023**
(21) Application number: 19213064.9
(22) Date of filing: 03.12.2019
(51) Int. Cl.: H01M 50/502, H01M 10/48, H01M 10/42, H01M 50/271

(54) **BATTERY MODULE**
BATTERIEMODUL
MODULE DE BATTERIE

(30) Priority: 23.12.2018 CN 201811578100
(43) Date of publication of application: 24.06.2020
(73) Proprietor: Contemporary Amperex Technology Co., Limited, Jiaocheng District Ningde City, Fujian 352100 (CN)
(72) Inventor: WANG, Chong, Ningde City, Fujian 352100 (CN); CAO, Hua, Ningde City, Fujian 352100 (CN); ZHU, Xianchun, Ningde City, Fujian 352100 (CN); QIAN, Mu, Ningde City, Fujian 352100 (CN); SU, Lilei, Ningde City, Fujian 352100 (CN)
(74) Representative: Ran, Handong

(56) References cited:
- EP-A1- 2 849 252
- EP-A1- 3 352 305
- CN-U- 205 863 576
- CN-U- 207 779 574

## Description

### Technical field

The present invention relates to the technical field of batteries, and in particular to a battery module.

### Prior art

In a battery module, the temperature of the battery is generally collected by an FPC and a thermistor. At present, the commonly used manners for the FPC and the thermistor to collect the temperature are as follows: (1) the thermistor is placed on an electrical connecting piece; when the battery module is in the working condition of a large current, the overcurrent on the connecting piece is relatively large, resulting in a relatively large deviation between the finally obtained temperature and the actual temperature of the battery; (2) the thermistor is directly fixed to the battery by an adhesive; due to the influence of the temperature and battery expansion (the adhesive property of the adhesive is reduced), when the battery module is used for a long time, since the connecting reliability between the thermistor and the battery is deteriorated, the temperature collected by the thermistor is not accurate. Respective prior art is provided by the documents: EP 3 352 305 A1, EP2849 252 A1, CN 205 863 576 U and CN 207 779 574 U.

### Summary of the invention

In view of the problems in the background art, an object of the present invention is to provide a battery module which improves the connecting reliability between the thermistor and the battery, so that the thermistor can accurately collect the temperature of the battery.

In order to achieve the above object, the present invention provides a battery module according to claim 1, comprising a plurality of batteries in a row or a plurality of rows arranged in a longitudinal direction (y); each of the batteries comprises a top cover and two electrode terminals disposed on the top cover at an interval in a transverse direction (X); a positioning bracket fixed to one of the plurality of batteries and provided with a first opening penetrating in an up-and-down direction (Z), wherein the positioning bracket comprises a first main body portion; two first positioning holes disposed in the first main body portion and configured to receive the corresponding electrode terminals; and a first extending portion formed on one side of the first main body portion in a longitudinal direction (Y), wherein the first opening is disposed in the first extending portion; a circuit board, comprising a second main body portion disposed above the positioning bracket; and a second mounting portion located below the main body portion in the first opening of the positioning bracket and supported on the one of the plurality of batteries; a thermistor, fixedly disposed on the second mounting portion of the circuit board; a fixing cover plate, tightly pressing the second mounting portion of the circuit board in the up-and-down direction (Z) to fix the second mounting portion to the top cover of the one of the plurality of batteries, thereby firmly fixing the thermistor to the top cover of the one of the plurality of batteries; and an electrical connecting piece located above the first main body portion of the positioning bracket and connected to the corresponding electrode terminals of two adjacent batteries of the plurality of batteries, the electrical connection piece fixing the position bracket to the one of the plurality of batteries; wherein the circuit board is provided with a reinforcing plate around the position of the thermistor, and the reinforcing plate extends in the up-and-down direction (Z) and exceeds a thermistor and the fixing cover plate directly and tightly presses the reinforcing plate in the up-and-down direction (Z), to tightly press the second mounting portion of the circuit board.

Thus, the battery module, comprising a plurality of batteries a positioning bracket, a circuit board, a thermistor and a fixing cover plate. The positioning bracket is fixed to the battery and provided with a first opening penetrating in the up-and-down direction. The circuit board has a main body portion disposed above the positioning bracket; and a mounting portion, located below the main body portion, contained in the first opening of the positioning bracket and supported on the battery. The thermistor is fixedly disposed on the mounting portion of the circuit board. The fixing cover plate tightly presses the mounting portion of the circuit board in the up-and-down direction to firmly position the mounting portion in thermal contact to the battery.

Each of the batteries comprises a top cover and two electrode terminals disposed on the top cover at an interval in the transverse direction (X). The positioning bracket has a first main body portion; first positioning holes, disposed in the first main body portion and sleeving the corresponding electrode terminals; and a first extending portion, formed on one side of the first main body portion in the longitudinal direction (Y), wherein the first opening is disposed in the first extending portion. The battery module further comprises: an electrical connecting piece located above the first main body portion of the positioning bracket and connected to the corresponding electrode terminals of the two adjacent batteries. The fixing cover plate firmly positions the mounting portion in thermal connection to the top cover of the battery.

In an embodiment the circuit board further has a second opening penetrating the second main body portion in the up-and-down direction (Z); and a second connecting portion, one end of which is connected to the second main body portion in a cantilever manner in the second opening, and the other end of which is bent downward and extends out of the second opening to be connected to the second mounting portion.

According to the invention the circuit board is provided with a reinforcing plate around the position of the thermistor, and the reinforcing plate extends and exceeds the thermistor in the up-and-down direction (Z). The fixing cover plate directly and tightly presses the reinforcing plate in the up-and-down direction (Z), to tightly press the mounting portion of the circuit board.

In an embodiment the positioning bracket further has a first supporting portion protruding from the first main body portion in the up-and-down direction (Z); and a second supporting portion, protruding from the first extending portion in the up-and-down direction (Z). The second main body portion of the circuit board is supported above the first supporting portion and the second supporting portion of the positioning bracket.

In an embodiment the fixing cover plate is located between the second main body portion of the circuit board and the one of the plurality of batteries, and is assembled on the positioning bracket.

In an embodiment the fixing cover plate has a third main body portion; a third extending portion, formed on both sides of the third main body portion in the transverse direction (X) and extending downward in the up-and-down direction (Z); a first elastic protrusion, disposed on one side of the third extending portion close to the first supporting portion in the longitudinal direction (Y); and a second elastic protrusion, disposed on one side of the third extending portion close to the second supporting portion in the longitudinal direction (Y). The first elastic protrusion and the first supporting portion are in fastening connection, and the second elastic protrusion and the second supporting portion are in fastening connection, to cause the third main body portion of the fixing cover plate to tightly press the second mounting portion of the circuit board.

In an embodiment the fixing cover plate has a third main body portion, one end of which is hinged to the second supporting portion, and the other end of which is capable of moving up and down relative to the positioning bracket; a third extending portion, formed on both sides of the third main body portion in the transverse direction (X) and extending downward in the up-and-down direction (Z); and a first elastic protrusion, disposed on one side of the third extending portion close to the first supporting portion. The first supporting portion and the first elastic protrusion are in fastening connection, to cause the third main body portion of the fixing cover plate to tightly press the second mounting portion of the circuit board.

In an embodiment the fixing cover plate is located above the second main body portion of the circuit board and is assembled on the positioning bracket.

In an embodiment the second supporting portion is provided with a second fastening hole in the up-and-down direction. The fixing cover plate has a third main body portion, located above the second main body portion of the circuit board; a pressing portion protruding from a position of the third main body portion corresponding to the first opening; an inserting portion, protruding from the third main body portion in the up-and-down direction (Z) and inserted into the second fastening hole; and a third elastic protrusion, formed at one end of the inserting portion away from the third main body portion and protruding circumferentially from the inserting portion. The third elastic protrusion extends out of the second fastening hole and is fastened to the second supporting portion, so that the pressing portion of the fixing cover plate tightly presses the mounting portion of the circuit board.

The present invention has the following beneficial effects: The thermistor is directly disposed on the circuit board, the mounting between the two is simple, and sampling can be realized without switching, thereby improving the connecting reliability between the thermistor and the circuit board.

Moreover, the fixing cover plate can provide a fixing force for firmly positioning the thermistor in thermal contact to the top cover of the battery, thereby improving the thermal connecting reliability between the thermistor and the top cover of the battery.

Meanwhile, since the thermistor collects a temperature representative of the temperature of the top cover of the battery, compared with the electrical connecting piece, the temperature of the top cover of the battery is closer to the actual temperature of the battery, so that the deviation between the temperature collected by the thermistor and the actual temperature of the battery is reduced, thereby greatly improving the accuracy of temperature collection of the thermistor.

### Brief description of the attached figures

- FIG. 1: is a three-dimensional diagram of a battery module according to the present invention.
- FIG. 2: is an enlarged view of a circled portion in FIG. 1.
- FIG. 3: is a top view of FIG. 1.
- FIG. 4: is a cross-sectional view taken along the line C-C in FIG. 3.
- FIG. 5: is a schematic view of mounting between the positioning bracket of a battery module and the electrode terminals of a battery.
- FIG. 6: is a schematic view of mounting between a circuit board, a thermistor, the positioning bracket, and a fixing cover plate of the battery module, wherein only a part of the circuit board is shown for the sake of clarity.
- FIG. 7: is a three-dimensional assembling diagram of a positioning bracket and a fixing cover plate in an embodiment.
- FIG. 8: is an exploded view of FIG. 7.
- FIG. 9: is a three-dimensional assembling diagram of the positioning bracket and the fixing cover plate in another embodiment, wherein the dotted line part is a positional relationship diagram before the positioning bracket and the fixing cover plate are mounted.
- FIG. 10: is an exploded three-dimensional diagram of the positioning bracket and the fixing cover plate in yet another embodiment.
- FIG. 11: is a top view after the positioning bracket and the fixing cover plate of FIG. 10 are assembled.
- FIG. 12: is a cross-sectional view taken along the line D-D in FIG. 11.
- FIG. 13: is a front view of the fixing cover plate in FIG. 10.

### Reference signs:

| | | | |
|---|---|---|---|
| 1 | Battery | 4 | Thermistor |
| 11 | Top cover | 5 | Fixing cover plate |
| 12 | Electrode terminal | 51 | Third main body portion |
| 13 | Explosion-proof valve | 52 | Third extending portion |
| 2 | Positioning bracket | 53 | First elastic protrusion |
| 21 | First opening | 54 | Second elastic protrusion |
| 22 | First main body portion | 55 | Pressing portion |
| 23 | First positioning hole | 56 | Inserting portion |
| 24 | First extending portion | 56A | First inserting portion |
| 25 | First supporting portion | 56B | Second inserting portion |
| 251 | First fastening hole | 57 | Third elastic protrusion |
| 26 | Second supporting portion | 6 | Electrical connecting piece |
| 261 | Fastening groove | 7 | Reinforcing plate |
| 262 | Second fastening hole | 8 | Heat conduction pad |
| 3 | Circuit board | 9 | Heat conduction adhesive |
| 31 | Main body portion | X | Transverse direction |
| 32 | Mounting portion | Y | Longitudinal direction |
| 33 | Opening | Z | Up-and-down direction |
| 34 | Connecting portion | | |

### Detailed embodiments

In order to clarify the objects, technical solutions, and advantages of the present application, the present application will be further described in detail below with reference to the accompanying drawings and embodiments. It is understood that the specific embodiments described herein are merely illustrative of the application and are not intended to be limiting the present application.

In the description of the present application, unless otherwise specified or defined clearly, the terms "first", "second", and "third" are used for descriptive purposes only, and are not to be construed as indicating or implying relative importance. The term "multiple" means two or more. Unless otherwise specified or stated, the terms "connected", "fixed", etc., should be understood in broad sense. For example, the "connected" may be fixedly connected or may be detachably connected, or integrally connected, or electrically connected. The "connected" may be directly connected or indirectly connected via an intermediate medium. For those skilled in the art, the specific meanings of the above terms in the present application can be understood based on specific conditions.

In the description of the present specification, it is to be understood that the orientation words "upper", "lower", and the like, which are described in the embodiments of the present application, are described with the angles shown in the drawings, and should not be construed as limiting to the embodiments of the present application. In addition, in the context, it is also to be understood that when an element is referred to as "on" or "under" another element, it can be directly connected "on" or "under" another element and can also be connected "on" or "under" another element by an intermediate element.

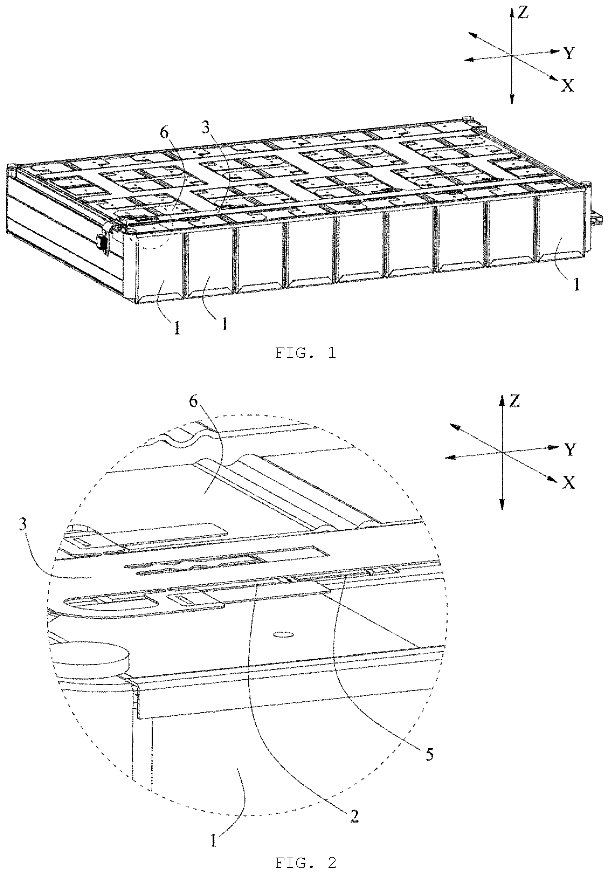

Referring to FIG. 1 to FIG. 13, the battery module of the present application comprises a plurality of batteries 1, a positioning bracket 2, a circuit board 3, a thermistor 4, a fixing cover plate 5, an electrical connecting piece 6, a reinforcing plate 7, a heat conduction pad 8 and a heat conduction adhesive 9.

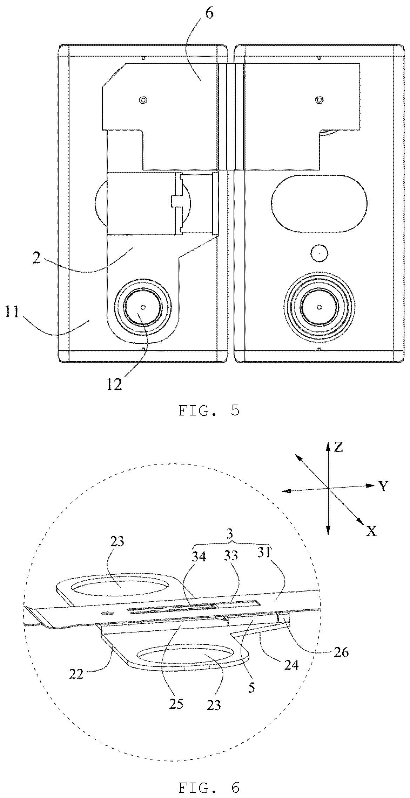

Referring to FIG. 1, the plurality of batteries 1 may be arranged in a row or arranged in a plurality of rows in the transverse direction X, and the plurality of batteries 1 in each row are arranged in the longitudinal direction Y. A circuit board 3 may be correspondingly disposed above each row of batteries 1. Referring to FIG. 5, each of the batteries 1 comprises a top cover 11 and two electrode terminals 12 disposed on the top cover 11 at an interval in the transverse direction X.

Referring to FIG. 2 and FIG. 5 to FIG. 11, the positioning bracket 2 is fixed to the battery 1 by the electrical connecting piece 6, the positioning bracket 2 is provided with a first opening 21 penetrating in the up-and-down direction Z, and the thermistor 4 is mounted at the corresponding position of the first opening 21. Herein, the first opening 21 can provide positioning for the mounting of the circuit board 3 and the thermistor 4, thereby facilitating the rapid assembling of the battery module.

Specifically, the positioning bracket 2 may have: a first main body portion 22; first positioning holes 23 disposed in the first main body portion 22 and sleeving the corresponding electrode terminals 12; and a first extending portion 24, formed on one side of the first main body portion 22 in the longitudinal direction Y, and the first opening 21 is disposed in the first extending portion 24. The electrical connecting piece 6 is located above the first body portion 22 of the positioning bracket 2 and connected to the corresponding electrode terminals 12 of two adjacent batteries 1 to fix the positioning bracket 2 to the battery 1.

The circuit board 3 may be a Flexible Printed Circuit (FPC). Referring to FIGS. 2, 4 and 6, the circuit board 3 may have a second main body portion 31 disposed above the positioning bracket 2; and a second mounting portion 32 located below the second main body portion 31, contained in the first opening 21 of the positioning bracket 2 and supported on the battery 1. The thermistor 4 is fixedly disposed on the second mounting portion 32 of the circuit board 3 and connected to a circuit inside the circuit board 3. The fixing cover plate 5 tightly presses the second mounting portion 32 of the circuit board 3 in the up-and-down direction Z to fix the second mounting portion 32 to the top cover 11 of the battery 1, thereby firmly fixing the thermistor 4 to the top cover 11 of the battery 1.

The thermistor 4 is directly disposed on the circuit board 3, the mounting between the two is simple, and the sampling can be realized without switching, thereby improving the connecting reliability between the thermistor 4 and the circuit board 3.

Moreover, since the fixing cover plate 5 can provide a fixing force for fixing the thermistor 4, and prevent the thermistor 4 from being detached from the top cover 11 of the battery 1 during the sampling, thereby improving the connecting reliability between thermistor 4 and the top cover 11 of the battery 1.

Meanwhile, the thermistor 4 collects the temperature of the top cover 11 of the battery 1, and the temperature of the top cover 11 of the battery 1 is closer to the actual temperature of the battery 1 (i.e., the temperature inside the battery 1) relative to the electrical connecting piece 6, so that the deviation between the temperature collected by the thermistor 4 and the actual temperature of the battery is reduced, thereby greatly improving the accuracy of temperature collection of the thermistor 4.

Referring to FIGS. 2, 4 and 6, the circuit board 3 further has a second opening 33 penetrating the second main body portion 31 in the up-and-down direction Z, and a second connecting portion 34, one end of which is connected to the second main body portion 31 in a cantilever manner in the second opening 33, and the other end of which is bent downward and extends out of the second opening 33 to be connected to the second mounting portion 32.

During the use of the battery module, each battery 1 will generate the expansion deformation of a certain degree, and a certain relative movement is caused between the top covers 11 of the two adjacent batteries 1. At this point, since the second connecting portion 34 is connected to the second main body portion 31 in a cantilever manner in the second opening 33, the second connecting portion 34 can be deformed under the action of an expansion force to absorb the expansion, thereby relieving the pulling action of the expansion force on the second mounting portion 32 of the circuit board 3 in the longitudinal direction Y.

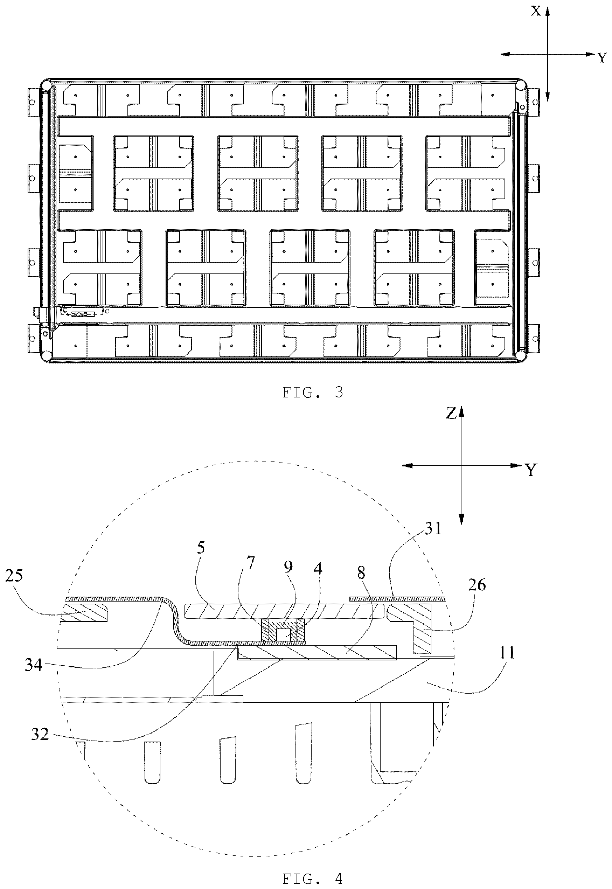

In order to conduct the temperature of the top cover 11 of the battery 1 to the thermistor 4 on the circuit board 3 timely and rapidly, a heat conduction pad 8 is disposed between the second mounting portion 32 of the circuit board 3 and the top cover 11 of the battery 1 (as shown in FIG. 4) .

Alternatively, a reinforcing sheet may be added on one side of the second mounting portion 32 of the circuit board 3 facing the battery 1, and the reinforcing sheet may be made of a metal having thermal conductivity, which can enhance the heat conduction effect on one hand and contributes to the increase in the strength of the circuit board 3 on the other hand, thereby further enhancing the fixing force of the fixing cover plate 5 for the second mounting portion 32.

Referring to FIG. 4, the position of the circuit board 3 around the thermistor 4 is provided with a reinforcing plate 7. Specifically, the reinforcing plate 7 may be disposed on both sides of the thermistor 4 in the longitudinal direction Y and/or the reinforcing plate 7 may be disposed on both sides of the thermistor 4 in the transverse direction X. The reinforcing plate 7 extends in the up-and-down direction Z and exceeds the thermistor 4 for providing a supporting force for the fixing cover plate 5.

After the fixing cover plate 5 is mounted, the fixing cover plate 5 directly and tightly presses the reinforcing plate 7 in the up-and-down direction Z, so that the second mounting portion 32 of the circuit board 3 is pressed tightly to fix the thermistor 4 without making contact with the thermistor 4, thereby preventing the fixing cover plate 5 from crushing the thermistor 4 during the pressing.

Referring to FIG. 4, a heat conductive adhesive 9 is filled between the reinforcing plate 7 and the thermistor 4. The thermal conductive adhesive 9 is configured to provide protection for the thermistor 4 on one hand, and improves the heat conduction effect on the other hand.

Referring to FIGS. 6 to 10, the positioning bracket 2 further has a first supporting portion 25 protruding from the first main body portion 22 in the up-and-down direction Z, and a second supporting portion 26 protruding from the first extending portion 24 in the up-and-down direction Z. The second main body portion 31 of the circuit board 3 is supported above the first supporting portion 25 and the second supporting portion 26 of the positioning bracket 2.

When the fixing cover 5 is assembled on the positioning bracket 2, the second mounting portion 32 of the circuit board 3 is tightly pressed to fix the thermistor 4. Wherein, the matching between the fixing cover plate 5 and the positioning bracket 2 may be one or more of clamping, riveting, hot riveting, adhering, and the like. Several matching structures between the fixing cover plate 5 and the positioning bracket 2 are described in detail below.

In the first embodiment, the fixing cover plate 5 is disposed between the second main body portion 31 of the circuit board 3 and the battery 1. Specifically, referring to FIG. 6 to FIG. 8, the fixing cover plate 5 has a third main body portion 51; a third extending portion 52, formed on both sides of the third main body portion 51 in the transverse direction X and extending downward in the up-and-down direction Z; a first elastic protrusion 53, disposed on one side of the third extending portion 52 close to the first supporting portion 25 in the longitudinal direction Y; and a second elastic protrusion 54, disposed on one side of the third extending portion 52 close to the second supporting portion 26 in the longitudinal direction Y. The first elastic protrusion 53 and the first supporting portion 25 of the positioning bracket 2 are in fastening connection, and the second elastic protrusion 54 and the second supporting portion 26 of the positioning bracket 2 are in fastening connection, so that the third main body portion 51 of the fixing cover plate 5 tightly presses the second mounting portion 32 of the circuit board 3.

In the first embodiment, the mounting and dismounting between the fixing cover plate 5 and the positioning bracket 2 are simple based on the elasticity of the first elastic protrusion 53 and the second elastic protrusion 54, thereby improving the assembling efficiency.

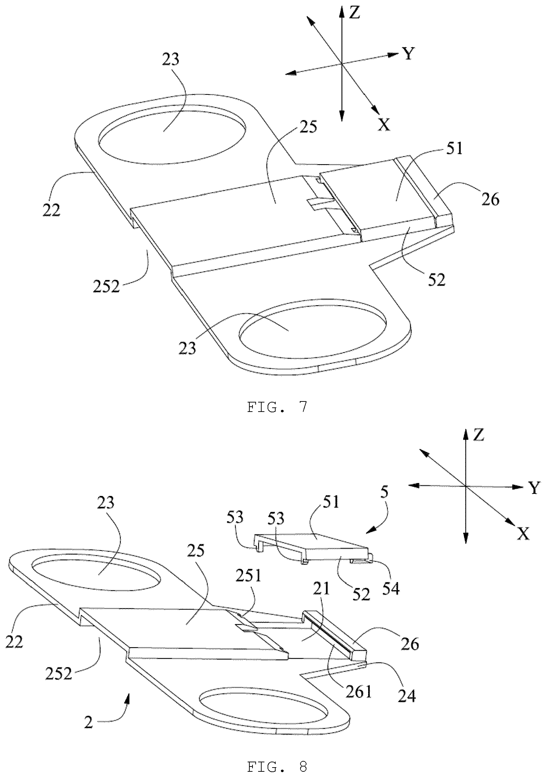

With reference to FIG. 8, the first supporting portion 25 is provided with a first fastening hole 251, and the first elastic protrusion 53 is fastened to the first supporting portion 25 by the first fastening hole 251. The second supporting portion 26 is provided with a fastening groove 261, and the second elastic protrusion 54 is fastened to the second supporting portion 26 by the fastening groove 261.

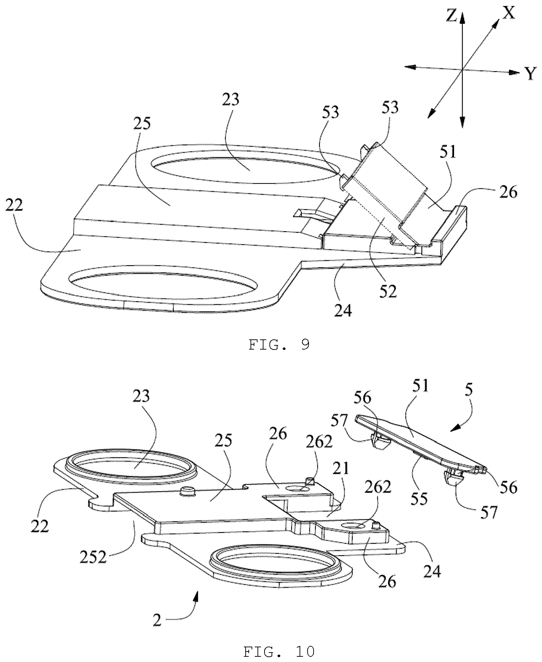

In the second embodiment, the fixing cover plate 5 is also disposed between the second main body portion 31 of the circuit board 3 and the battery 1. Specifically, referring to FIG. 9, the fixing cover plate 5 has a third main body portion 51, one end of which is hinged to the second supporting portion 26, and the other end of which is capable of moving up and down relative to the positioning bracket 2; a third extending portion 52, formed on both sides of the third main body portions 51 along the transverse direction X and extending downward in the up-and-down direction Z; and a first elastic protrusion 53, disposed on one side of the third extending portion 52 close to the first supporting portion 25. When it is necessary to tightly press the second mounting portion 32 of the circuit board 3, the other end of the third main body portion 51 is pressed down until the first supporting portion 25 and the first elastic protrusion 53 are in fastening connection, so that the third body portion 51 of the fixing cover plate 5 tightly presses the second mounting portion 32 of the circuit board 3. When it is necessary to release the fixing of the second mounting portion 32 of the circuit board 3, the other end of the third body portion 51 is pulled up until the first elastic protrusion 53 is detached from the first fastening hole 251 of the first supporting portion 25.

In the second embodiment, since the one end of the third body portion 51 is directly hinged to the second supporting portion 26, in the process of mounting the fixing cover plate 5, the fixing cover plate 5 is not required to be positioned, and only the other end of the third main body portion 51 of the fixing cover plate 5 is required to be pressed down directly, thereby simplifying the matching structure between the fixing cover plate 5 and the positioning bracket 2, and further improving the assembling efficiency.

In the third embodiment, the fixing cover plate 5 is disposed above the second main body portion 31 of the circuit board 3.

Specifically, referring to FIGS. 10 to 13, the second supporting portion 26 is provided with a second fastening hole 262 in the up-and-down direction Z. The fixing cover plate 5 has a third main body portion 51, located above the second main body portion 31 of the circuit board 3; a pressing portion 55, protruding from a position of the third main body portion 51 corresponding to the first opening 21; an inserting portion 56, protruding from the third main body portion 51 in the up-and-down direction Z and inserted into the second fastening hole 262; and a third elastic protrusion 57, formed on one end of the inserting portion 56 away from the third body portion 51 and protruding circumferentially from the inserting portion 56. The third elastic protrusion 57 extends out of the second fastening hole 262 and is fastened to the second supporting portion 26, such that the pressing portion 55 of the fixing cover plate 5 tightly presses the second mounting portion 32 of the circuit board 3.

In the third embodiment, the fixing cover plate 5 is directly assembled on the positioning bracket 2 from the upper side of the second main body portion 31 of the circuit board 3, and is not interfered by the circuit board 3 during the assembling, so that the assembling is simple and easy to operate, thereby further improving the assembling efficiency.

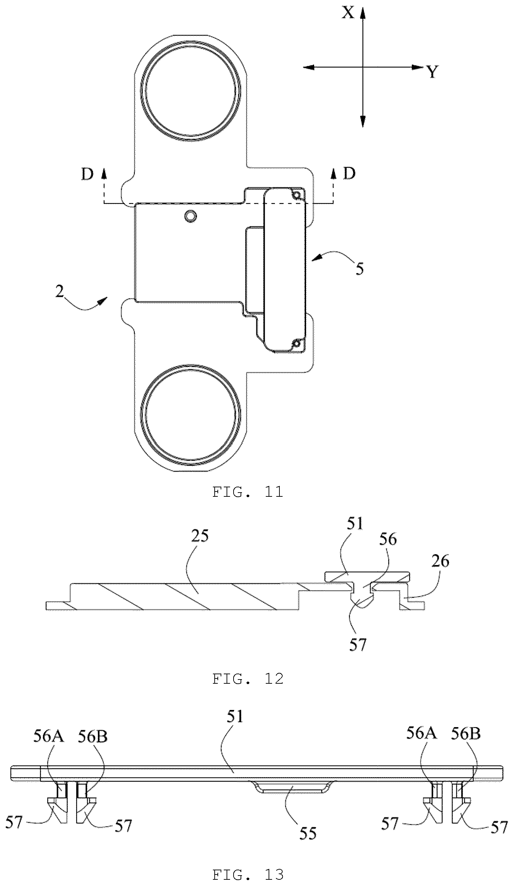

With further reference to FIGS. 10 and 13, the inserting portions 56 may be disposed in pairs, and the pair of two inserting portions 56 comprise: a first inserting portion 56A provided with a third elastic protrusion 57; and a second inserting portion 56B, spaced apart from the first inserting portion 56A and provided with a third elastic protrusion 57. Herein, the third elastic protrusion 57 on the first inserting portion 56A and the third elastic protrusion 57 on the second inserting portion 56B are also disposed at an interval, so that the two third elastic protrusions 57 can be relatively moved to be smoothly mounted during the mounting process of the fixing cover plate 5.

Finally, it should be noted that when the battery module of the present application is applied to a battery pack, the fixing cover plate 5 may also be an upper box cover of the battery pack, and at this point, a corresponding pressing structure is directly added in the corresponding area on the upper box cover to tightly press the second mounting portion 32 of the circuit board 3.

## Claims

1. A battery module, **characterized by** comprising:
a plurality of batteries (1)in a row or a plurality of rows arranged in a longitudinal direction (y); each of the batteries (1) comprises a top cover (11) and two electrode terminals (12) disposed on the top cover (11) at an interval in a transverse direction (X);
a positioning bracket (2) fixed to one of the plurality of batteries (1) and provided with a first opening (21) penetrating in an up-and-down direction (Z), wherein the positioning bracket (2) comprises a first main body portion (22); two first positioning holes (23) disposed in the first main body portion (22) and configured to receive the corresponding electrode terminals (12); and
a first extending portion (24) formed on one side of the first main body portion (22) in a longitudinal direction (Y), wherein the first opening (21) is disposed in the first extending portion (24);
a circuit board (3), comprising a second main body portion (31) disposed above the positioning bracket (2);
and a second mounting portion (32) located below the main body portion (31) in the first opening (21) of the positioning bracket (2) and supported on the one of the plurality of batteries (1)
a thermistor (4), fixedly disposed on the second mounting portion (32) of the circuit board (3);
a fixing cover plate (5), tightly pressing the second mounting portion (32) of the circuit board (3) in the up-and-down direction (Z) to fix the second mounting portion (32) to the top cover (11) of the one of the plurality of batteries (1), thereby firmly fixing the thermistor (4) to the top cover (11) of the one of the plurality of batteries (1); and
an electrical connecting piece (6) located above the first main body portion (22) of the positioning bracket (2) and connected to the corresponding electrode terminals (12) of two adjacent batteries of the plurality of batteries (1), the electrical connection piece (6) fixing the position bracket (2) to the one of the plurality of batteries (1);
wherein
the circuit board (3) is provided with a reinforcing plate (7) around the position of the thermistor (4), and the reinforcing plate (7) extends in the up-and-down direction (Z) and exceeds a thermistor (4) and the fixing cover plate (5) directly and tightly presses the reinforcing plate (7) in the up-and-down direction (Z), to tightly press the second mounting portion (32) of the circuit board (3).

2. The battery module according to claim 1, **characterized in that** the circuit board (3) further comprises a second opening (33) penetrating the second main body portion (31) in the up-and-down direction (Z); and a second connecting portion (34), one end of which is connected to the second main body portion (31) in a cantilever manner in the second opening (33), and the other end of which is bent downward and extends out of the second opening (33) to be connected to the second mounting portion (32).

3. The battery module according to claim 1, **characterized in that**
the positioning bracket (2) further comprises a first supporting portion (25) protruding from the first main body portion (22) in the up-and-down direction (Z); and a second supporting portion (26) protruding from the first extending portion (24) in the up-and-down direction (Z); and
the second main body portion (31) of the circuit board (3) is supported above the first supporting portion (25) and the second supporting portion (26) of the positioning bracket (2).

4. The battery module according to claim 3, **characterized in that** the fixing cover plate (5) is located between the second main body portion (31) of the circuit board (3) and the one of the plurality of batteries (1), and is assembled on the positioning bracket (2).

5. The battery module according to claim 4, **characterized in that**
the fixing cover plate (5) comprises a third main body portion (51); a third extending portion (52) formed on both sides of the third main body portion (51) in the transverse direction (X) and extending downward in the up-and-down direction (Z); a first elastic protrusion (53) disposed on one side of the third extending portion (52) close to the first supporting portion (25) in the longitudinal direction (Y); and a second elastic protrusion (54) disposed on one side of the third extending portion (52) close to the second supporting portion (26) in the longitudinal direction (Y); and
the first elastic protrusion (53) and the first supporting portion (25) are in fastening connection, and the second elastic protrusion (54) and the second supporting portion (26) are in fastening connection, to cause the third main body portion (51) of the fixing cover plate (5) to tightly press the second mounting portion (32) of the circuit board (3).

6. The battery module according to claim 4, **characterized in that**
the fixing cover plate (5) comprises a third main body portion (51), one end of which is hinged to the second supporting portion (26), and the other end of which is configured to move up and down relative to the positioning bracket (2); a third extending portion (52) formed on both sides of the third main body portion (51) in the transverse direction (X) and extending downward in the up-and-down direction (Z); and a first elastic protrusion (53) disposed on one side of the third extending portion (52) close to the first supporting portion (25); and
the first supporting portion (25) and the first elastic protrusion (53) are in fastening connection, to cause the third main body portion (51) of the fixing cover plate (5) to tightly press the second mounting portion (32) of the circuit board (3).

7. The battery module according to claim 3, **characterized in that** the fixing cover plate (5) is located above the second main body portion (31) of the circuit board (3) and is assembled on the positioning bracket (2).

8. The battery module according to claim 7, **characterized in that**
the second supporting portion (26) is provided with a second fastening hole (262) in the up-and-down direction (Z);
the fixing cover plate (5) comprises a third main body portion (51) located above the second main body portion (31) of the circuit board (3); a pressing portion (55) protruding from a position of the third main body portion (51) corresponding to the first opening (21); an inserting portion (56) protruding from the third main body portion (51) in the up-and-down direction (Z) and inserted into the second fastening hole (262); and a third elastic protrusion (57) formed at one end of the inserting portion (56) away from the third main body portion (51) and protruding circumferentially from the inserting portion (56); and
the third elastic protrusion (57) extends out of the second fastening hole (262) and is fastened to the second supporting portion (26), so that the pressing portion (55) of the fixing cover plate (5) tightly presses the second mounting portion (32) of the circuit board (3).

9. A battery pack, comprising the battery module according to any one of claims 1-8.

10. A vehicle, comprising:
a power source to provide power for the vehicle; and
the battery pack according to claim 9 configured to provide electricity for the power source.

## Patentansprüche

1. Batteriemodul, **dadurch gekennzeichnet, dass** es Folgendes umfasst:
eine Vielzahl von Batterien (1) in einer Reihe oder einer Vielzahl von Reihen, die in einer Längsrichtung (y) angeordnet sind; wobei die Batterien (1) jeweils eine obere Abdeckung (11) und zwei auf der oberen Abdeckung (11) in einer Querrichtung (X) in einem Abstand angeordnete Elektrodenanschlussklemmen (12) umfassen;
eine Positionierungsklammer (2), die an einer der Vielzahl von Batterien (1) fixiert ist und mit einer sie in einer Aufwärts-Abwärts-Richtung (Z) durchdringenden ersten Öffnung (21) versehen ist, wobei die Positionierungsklammer (2) Folgendes umfasst: einen ersten Hauptkörperabschnitt (22); zwei in dem ersten Hauptkörperabschnitt (22) angeordnete erste Positionierungslöcher (23), die dazu konfiguriert sind, die entsprechenden Elektrodenanschlussklemmen (12) aufzunehmen; und einen ersten Erstreckungsabschnitt (24), der auf einer Seite des ersten Hauptkörperabschnitts (22) in einer Längsrichtung (Y) gebildet ist, wobei die erste Öffnung (21) in dem ersten Erstreckungsabschnitt (24) angeordnet ist;
eine Platine (3), umfassend einen zweiten Hauptkörperabschnitt (31), der über der Positionierungsklammer (2) angeordnet ist; und einen zweiten Befestigungsabschnitt (32), der sich unter dem Hauptkörperabschnitt (31) in der ersten Öffnung (21) der Positionierungsklammer (2) befindet und auf der einen der Vielzahl von Batterien (1) gestützt wird;
einen Thermistor (4), der ortsfest auf dem zweiten Befestigungsabschnitt (32) der Platine (3) angeordnet ist;
eine Fixierungsabdeckplatte (5), die in der Aufwärts-Abwärts-Richtung (Z) fest auf den zweiten Befestigungsabschnitt (32) der Platine (3) drückt, um den zweiten Befestigungsabschnitt (32) an der oberen Abdeckung (11) der einen der Vielzahl von Batterien (1) zu fixieren, wodurch der Thermistor (4) fest an der oberen Abdeckung (11) der einen der Vielzahl von Batterien (1) fixiert wird; und
ein elektrisches Verbindungsstück (6), das sich über dem ersten Hauptkörperabschnitt (22) der Positionierungsklammer (2) befindet und mit den entsprechenden Elektrodenanschlussklemmen (12) zwei benachbarter Batterien der Vielzahl von Batterien (1) verbunden ist, wobei das elektrische Verbindungsstück (6) die Positionierungsklammer (2) an der einen der Vielzahl von Batterien (1) fixiert;
wobei
die Platine (3) mit einer Verstärkungsplatte (7) um die Position des Thermistors (4) versehen ist und sich die Verstärkungsplatte (7) in der Aufwärts-Abwärts-Richtung (Z) erstreckt und über einen Thermistor (4) hinausgeht und die Fixierungsabdeckplatte (5) in der Aufwärts-Abwärts-Richtung (Z) direkt und fest auf die Verstärkungsplatte (7) drückt, um fest auf den zweiten Befestigungsabschnitt (32) der Platine (3) zu drücken.

2. Batteriemodul nach Anspruch 1, **dadurch gekennzeichnet, dass**
die Platine (3) ferner Folgendes umfasst: eine zweite Öffnung (33), die den zweiten Hauptkörperabschnitt (31) in der Aufwärts-Abwärts-Richtung (Z) durchdringt; und einen zweiten Verbindungsabschnitt (34), dessen eines Ende auf auskragende Weise in der zweiten Öffnung (33) mit dem zweiten Hauptkörperabschnitt (31) verbunden ist, und dessen anderes Ende nach unten gebogen ist und sich aus der zweiten Öffnung (33) heraus erstreckt, um mit dem zweiten Befestigungsabschnitt (32) verbunden zu sein.

3. Batteriemodul nach Anspruch 1, **dadurch gekennzeichnet, dass**
die Positionierungsklammer (2) ferner Folgendes umfasst: einen ersten Stützabschnitt (25), der in der Aufwärts-Abwärts-Richtung (Z) von dem ersten Hauptkörperabschnitt (22) vorsteht; und einen zweiten Stützabschnitt (26), der in der Aufwärts-Abwärts-Richtung (Z) von dem ersten Erstreckungsabschnitt (24) vorsteht; und
der zweite Hauptkörperabschnitt (31) der Platine (3) über dem ersten Stützabschnitt (25) und dem zweiten Stützabschnitt (26) der Positionierungsklammer (2) gestützt wird.

4. Batteriemodul nach Anspruch 3, **dadurch gekennzeichnet, dass**
sich die Fixierungsabdeckplatte (5) zwischen dem zweiten Hauptkörperabschnitt (31) der Platine (3) und der einen der Vielzahl von Batterien (1) befindet und auf der Positionierungsklammer (2) montiert ist.

5. Batteriemodul nach Anspruch 4, **dadurch gekennzeichnet, dass**
die Fixierungsabdeckplatte (5) Folgendes umfasst: einen dritten Hauptkörperabschnitt (51); einen dritten Erstreckungsabschnitt (52), der in der Querrichtung (X) auf beiden Seiten des dritten Hauptkörperabschnitts (51) gebildet ist und sich in der Aufwärts-Abwärts-Richtung (Z) nach unten erstreckt; einen ersten elastischen Vorsprung (53), der in der Längsrichtung (Y) auf einer Seite des dritten Erstreckungsabschnitts (52) nah bei dem ersten Stützabschnitt (25) angeordnet ist; und einen zweiten elastischen Vorsprung (54), der in der Längsrichtung (Y) auf einer Seite des dritten Erstreckungsabschnitts (52) nah bei dem zweiten Stützabschnitt (26) angeordnet ist; und
der erste elastische Vorsprung (53) und der erste Stützabschnitt (25) in Befestigungsverbindung stehen und der zweite elastische Vorsprung (54) und der zweite Stützabschnitt (26) in Befestigungsverbindung stehen, um zu bewirken, dass der dritte Hauptkörperabschnitt (51) der Fixierungsabdeckplatte (5) fest auf den zweiten Befestigungsabschnitt (32) der Platine (3) drückt.

6. Batteriemodul nach Anspruch 4, **dadurch gekennzeichnet, dass**
die Fixierungsabdeckplatte (5) Folgendes umfasst: einen dritten Hauptkörperabschnitt (51), dessen eines Ende gelenkig mit dem zweiten Stützabschnitt (26) verbunden ist und dessen anderes Ende dazu konfiguriert ist, sich relativ zu der Positionierungsklammer (2) auf und ab zu bewegen; einen dritten Erstreckungsabschnitt (52), der in der Querrichtung (X) auf beiden Seiten des dritten Hauptkörperabschnitts (51) gebildet ist und sich in der Aufwärts-Abwärts-Richtung (Z) nach unten erstreckt; und einen ersten elastischen Vorsprung (53), der auf einer Seite des dritten Erstreckungsabschnitts (52) nah bei dem ersten Stützabschnitt (25) angeordnet ist; und
der erste Stützabschnitt (25) und der erste elastische Abschnitt (53) in Befestigungsverbindung stehen, um zu bewirken, dass der dritte Hauptkörperabschnitt (51) der Fixierungsabdeckplatte (5) fest auf den zweiten Befestigungsabschnitt (32) der Platine (3) drückt.

7. Batteriemodul nach Anspruch 3, **dadurch gekennzeichnet, dass**
sich die Fixierungsabdeckplatte (5) über dem zweiten Hauptkörperabschnitt (31) der Platine (3) befindet und auf der Positionierungsklammer (2) montiert ist.

8. Batteriemodul nach Anspruch 7, **dadurch gekennzeichnet, dass**
der zweite Stützabschnitt (26) mit einem zweiten Befestigungsloch (262) in der Aufwärts-Abwärts-Richtung (Z) versehen ist;
die Fixierungsabdeckplatte (5) Folgendes umfasst: einen dritten Hauptkörperabschnitt (51), der sich über dem zweiten Hauptkörperabschnitt (31) der Platine (3) befindet; einen Druckabschnitt (55), der von einer der ersten Öffnung (21) entsprechenden Position des dritten Hauptkörperabschnitts (51) vorsteht; einen Einsteckabschnitt (56), der in der Aufwärts-Abwärts-Richtung (Z) von dem dritten Hauptkörperabschnitt (51) vorsteht und in das zweite Befestigungsloch (262) eingesteckt ist; und einen dritten elastischen Vorsprung (57), der an einem von dem dritten Hauptkörperabschnitt (51) abgelegenen Ende des Einsteckabschnitts (56) gebildet ist und in Umfangsrichtung von dem Einsteckabschnitt (56) vorsteht; und
sich der dritte elastische Vorsprung (57) aus dem zweiten Befestigungsloch (262) heraus erstreckt und an dem zweiten Stützabschnitt (26) befestigt ist, sodass der Druckabschnitt (55) der Fixierungsabdeckplatte (5) fest auf den zweiten Befestigungsabschnitt (32) der Platine (3) drückt.

9. Batteriesatz, umfassend das Batteriemodul nach einem der Ansprüche 1-8.

10. Fahrzeug, umfassend:
eine Leistungsquelle zum Bereitstellen von Leistung für das Fahrzeug; und den Batteriesatz nach Anspruch 9, der dazu konfiguriert ist, elektrischen Strom für die Leistungsquelle bereitzustellen.

## Revendications

1. Module de batterie, **caractérisé en ce qu'**il comprend :
une pluralité de batteries (1) dans une rangée ou une pluralité de rangées disposées le long d'une direction longitudinale (y) ; chacune des batteries (1) comprenant un couvercle supérieur (11) et deux bornes d'électrode (12) disposées sur le couvercle supérieur (11) à un intervalle dans une direction transversale (X) ;
un support de positionnement (2) fixé à l'une de la pluralité de batteries (1) et pourvu d'une première ouverture (21) pénétrant dans une direction haut-bas (Z), le support de positionnement (2) comprenant une première partie corps principal (22) ; deux premiers trous de positionnement (23) disposés dans la première partie corps principal (22) et conçus pour recevoir les bornes d'électrode correspondantes (12) ; et une première partie d'extension (24) formée sur un côté de la partie corps principal (22) dans une direction longitudinale (Y), la première ouverture (21) étant disposée dans la première partie d'extension (24) ;
une carte de circuit imprimé (3), comprenant une deuxième partie corps principal (31) disposée au-dessus du support de positionnement (2) ; et une seconde partie de montage (32) située en dessous de la partie corps principal (31) dans la première ouverture (21) du support de positionnement (2) et supportée sur ladite batterie de la pluralité de batteries (1) ;
une thermistance (4), disposée fixe sur la seconde partie de montage (32) de la carte de circuit imprimé (3) ;
une plaque de couvercle de fixation (5), pressant étroitement la seconde partie de montage (32) de la carte de circuit imprimé (3) dans la direction haut-bas (Z) pour fixer la seconde partie de montage (32) au couvercle supérieur (11) de ladite batterie de la pluralité de batteries (1), fixant ainsi fermement la thermistance (4) au couvercle supérieur (11) de ladite batterie de la pluralité de batteries (1) ; et
une pièce de raccordement électrique (6) située au-dessus de la première partie corps principal (22) du support de positionnement (2) et raccordée aux bornes d'électrode correspondantes (12) de deux batteries adjacentes de la pluralité de batteries (1), la pièce de raccordement électrique (6) fixant le support de positionnement (2) à ladite batterie de la pluralité de batteries (1) ;
dans lequel
la carte de circuit imprimé (3) est pourvue d'une plaque de renfort (7) autour de la position de la thermistance (4), et la plaque de renfort (7) s'étend dans la direction haut-bas (Z) et dépasse une thermistance (4) et la plaque de couvercle de fixation (5) presse directement et étroitement la plaque de renfort (7) dans la direction haut-bas (Z), pour presser étroitement la seconde partie de montage (32) de la carte de circuit imprimé (3).

2. Module de batterie selon la revendication 1, **caractérisé en ce que** la carte de circuit imprimé (3) comprend en outre une seconde ouverture (33) pénétrant dans la deuxième partie corps principal (31) dans la direction haut-bas (Z) ; et une seconde partie de raccordement (34), dont une extrémité est raccordée à la deuxième partie corps principal (31) en porte à faux dans la seconde ouverture (33), et dont l'autre extrémité est coudée vers le bas et s'étend hors de la seconde ouverture (33) pour être raccordée à la seconde partie de montage (32).

3. Module de batterie selon la revendication 1, **caractérisé en ce que**
le support de positionnement (2) comprend en outre une première partie de support (25) faisant saillie depuis la première partie corps principal (22) dans la direction haut-bas (Z) ; et une seconde partie de support (26) faisant saillie depuis la première partie d'extension (24) dans la direction haut-bas (Z) ; et
la deuxième partie corps principal (31) de la carte de circuit imprimé (3) est supportée au-dessus de la première partie de support (25) et de la seconde partie de support (26) du support de positionnement (2).

4. Module de batterie selon la revendication 3, **caractérisé en ce que** la plaque de couvercle de fixation (5) est située entre la deuxième partie corps principal (31) de la carte de circuit imprimé (3) et ladite batterie de la pluralité de batteries (1), et est assemblée sur le support de positionnement (2).

5. Module de batterie selon la revendication 4, **caractérisé en ce que**
la plaque de couvercle de fixation (5) comprend une troisième partie corps principal (51) ; une troisième partie d'extension (52) formée de part et d'autre de la troisième partie corps principal (51) dans la direction transversale (X) et s'étendant vers le bas dans la direction haut-bas (Z) ; une première saillie élastique (53) disposée sur un côté de la troisième partie d'extension (52) près de la première partie de support (25) dans la direction longitudinale (Y) ; et une deuxième saillie élastique (54) disposée sur un côté de la troisième partie d'extension (52) près de la seconde partie de support (26) dans la direction longitudinale (Y) ; et
la première saillie élastique (53) et la première partie de support (25) sont en liaison d'attache, et la deuxième saillie élastique (54) et la seconde partie de support (26) sont en liaison d'attache, pour amener la troisième partie corps principal (51) de la plaque de couvercle de fixation (5) à presser étroitement la seconde partie de montage (32) de la carte de circuit imprimé (3).

6. Module de batterie selon la revendication 4, **caractérisé en ce que**
la plaque de couverture de fixation (5) comprend une troisième partie corps principal (51), dont une extrémité est articulée à la seconde partie de support (26), et dont l'autre extrémité est conçue pour se déplacer vers le haut et vers le bas par rapport au support de positionnement (2) ; une troisième partie d'extension (52) formée de part et d'autre de la troisième partie corps principal (51) dans la direction transversale (X) et s'étendant vers le bas dans la direction haut-bas (Z) ; et une première saillie élastique (53) disposée sur un côté de la troisième partie d'extension (52) près de la première partie de support (25) ; et
la première partie de support (25) et la première saillie élastique (53) sont en liaison d'attache, pour amener la troisième partie corps principal (51) de la plaque de couvercle de fixation (5) à presser étroitement la seconde partie de montage (32) de la carte de circuit imprimé (3).

7. Module de batterie selon la revendication 3, **caractérisé en ce que** la plaque de couvercle de fixation (5) est située au-dessus de la deuxième partie corps principal (31) de la carte de circuit imprimé (3) et est assemblée sur le support de positionnement (2).

8. Module de batterie selon la revendication 7, **caractérisé en ce que**
la seconde partie de support (26) est pourvue d'un second trou d'attache (262) dans la direction haut-bas (Z) ;
la plaque de couverture de fixation (5) comprend une troisième partie corps principal (51) située au-dessus de la deuxième partie corps principal (31) de la carte de circuit imprimé (3) ; une partie de pression (55) faisant saillie depuis une position de la troisième partie corps principal (51) correspondant à la première ouverture (21) ; une partie d'insertion (56) faisant saillie depuis la troisième partie corps principal (51) dans la direction haut-bas (Z) et insérée dans le second trou d'attache (262) ; et une troisième saillie élastique (57) formée au niveau d'une extrémité de la partie d'insertion (56) à distance de la troisième partie corps principal (51) et faisant saillie circonférentiellement depuis la partie d'insertion (56) ; et
la troisième saillie élastique (57) s'étend hors du second trou d'attache (262) et est attachée à la seconde partie de support (26), de telle sorte que la partie de pression (55) de la plaque de couvercle de fixation (5) presse étroitement la seconde partie de montage (32) de la carte de circuit imprimé (3).

9. Bloc-batterie, comprenant le module de batterie selon l'une quelconque des revendications 1 à 8.

10. Véhicule, comprenant :
une source d'alimentation destinée à fournir l'alimentation pour un véhicule ; et
le bloc-batterie selon la revendication 9 conçu pour fournir de l'électricité pour la source d'alimentation.
